# EUROPEAN PATENT APPLICATION

(11) **EP 0 913 779 A2**
(43) Date of publication of application: **06.05.1999**
(21) Application number: 98108790.1
(22) Date of filing: 14.05.1998
(51) Int. Cl.: G06F 17/30, G06F 17/60

(54) **Browser for documents with annotations**

(30) Priority: 03.11.1997 US 962746
(71) Applicant: MITSUBISHI DENKI KABUSHIKI KAISHA, Tokyo 100-8310 (JP)
(72) Inventor: Ginsburg, Adam, New York, New York 10016 (US); Shieber, Stuart Merrill, Cambridge, Massachusetts 02139 (US); Marks, Joseph, Belmont, Massachusetts 02178 (US)
(74) Representative: Pfenning, Meinig & Partner

(57) **Abstract**

The present invention provides a browser for viewing documents in Postscript or a similar type format, with added functionality. The system of the present invention creates information for additional material, such as bookmarks, annotations, and hyperlinks, based upon user inputs. The information includes the position and content of the additional material, and the references to other additional material. The information is stored in the comments section of the document file or in a corresponding auxiliary file, which accompanies the document file. While a document is being view in a browser, the information is used for manipulating and traversing the document The additional material is presented on the display of the document and can be selected by the user. The user then reviews the added material and can use the hyperlinks to move to other portions of the document. Users can add additional material. Upon closing the document, all of the information is stored for later retrieval.

## Description

### Field of the Invention

The present invention relates to a computer-based system for viewing documents, in particular documents in a PostScript format. More specifically, it relates to a viewer which allows the addition of annotations to documents and hyperlinking of annotations within these documents.

### Background of the Invention

A variety of different formats can be used for representing documents in a computer. Different standards have developed which are used based upon the objectives for use of the document.

In word-processing systems, documents are typically represented in ASCII codes with formatting codes. ASCII codes represent each character by a specific digital value. The formatting codes allow different type fonts, character fonts, and positions to be used. The word-processing program then generates the characters in the appropriate fonts and positions for display. Since each character is separately represented, characters can be easily changed, removed, or added. An ASCII-based format also allows simple searches for characters or groups of characters, and can easily represent pages. However, representing documents in an ASCII-based format has many drawbacks. For example, drawings cannot be easily represented in an ASCII-based format. Typically, a word processor uses an embedded object that references a drawing that is stored elsewhere in a different format.

Graphical based formats address some of the deficiencies in an ASCII-based formats, but have additional problems. In a typical graphical-based format, each page of a document is represented by bits for each light and dark space on the page. For example, a fax machine generates a representation of a document which is merely the pixels which are the dark spaces on the page representing characters. Such a format however, does not allow searching or skipping pages. Also, most graphical formats do not easily grow or shrink since the characters can become distorted.

Adobe, Inc. developed a graphical type representation called "PostScript" which has become the premier accepted page-description language. In Postscript format, a graphical representation of a page is used that allows for magnification and shrinking. The PostScript format includes any material that fits upon a printed page, including figures and drawings. Most documents are converted to PostScript format for printing. Most documents are converted to PostScript format for printing. Most on-line documents, such as documents on CD-ROMs, the Internet, or the World Wide Web, are represented in Postscript format. However, there are still some significant deficiencies with files in PostScript format. Typically, a document viewer simply displays the document page as it would appear if printed. Since pages in the file are stored sequentially, the viewer must go through each page to arrive at a desired page. For long documents, this can be extremely tedious. Generally, jumping around in a document is not feasible. Also, information cannot easily be added to the document for future reference or for review by others.

When one views a paper document, he or she will often scan through the pages, turn to other sections, or make notes on the documents or in the margins. These actions are not possible in a typical PostScript-type document. In order to move around in a graphical type document, a different format, referred to as hypertext, has been used. The Hypertext format allows positioning a link to some other element, either another object or file, or another place in the file, with a specific position on a page. To activate the link, the user selects the identified position. For example, U.S. Patent No. 5,367,621 discloses a generalized link from a reference point in an on-line book to an arbitrary multi media object. However, as disclosed in that patent, the links must be created by the author of the text when the book is created. Arbitrary links cannot be added to an existing document. To do so would require entry of new codes representing the links.

### Summary of the Invention

The foregoing deficiencies in existing document systems are overcome by the present invention which includes a browser or viewer for documents, such as Postscript documents, with added functionality. The system of the present invention reads and displays PostScript-type documents. It also allows the addition of bookmarks, annotations, and hyperlinks in order to more easily move around and add information to a Postscript document. The information for the bookmarks, annotations, and hyperlinks are created by the browser of the present invention. While the document is being viewed, the information and links are used for manipulating and traversing the document. The information is also stored in the comments section of the Postscript document so that they can be retrieved later without compromising the existing functionality and portability of the document. The present invention can also be used with any page description format documents which include a comments section or auxiliary file, not just Postscript documents.

### Brief Description of the Drawings

- Fig. 1: is a block diagram illustrating hardware of a computer system which could be used in implementing the browser of the present invention.
- Fig. 2: represents the data format for a PostScript document.
- Fig. 3: illustrates a display for the present invention.
- Fig. 4: is a flow diagram for operation of the browser according to an embodiment of the present invention.

### Detailed Description

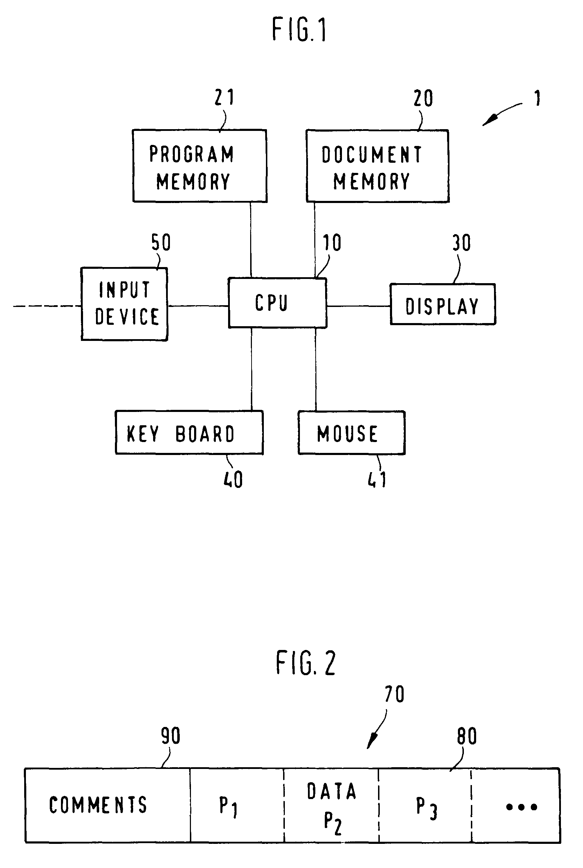

The present invention relates to a viewer or browser that operates on a computer to view digitally stored documents, particularly documents in PostScript formats. Fig. 1 illustrates hardware which could be used in implementing the present invention. As illustrated in Fig. 1, computer system 1 includes central processing unit (CPU) 10. The CPU 10 can be any type of processor, such as those used in general-purpose computers for executing instructions.

A program memory 21 stores instruction steps executed by the CPU 10 in order to read, display and modify documents. The documents are stored in the document memory 20. The program memory 21 and document memory 20 can be any type of memories including RAM, ROM, CD-ROM, or other digital storage medium. Although the program memory 21 and document memory 20 are illustrated as separate elements, they may also be different portions of the same memory structure.

A display 30 is connected to the CPU 10 in order to display the documents and other information to the user. A keyboard 40 and mouse 41 are connected to the CPU 10 for the user to display the documents and operate the browser. Of course, other devices could be used by the user in order to manipulate and display documents.

An input device 50 is connected to the CPU 10 in order to input document data into the document memory 20. The input device 50 could include a modem for connection to an external source such as the Internet, or other device for retrieving documents in the proper format.

As illustrates in Fig. 2, document data 70 for a Postscript document includes two sections, a data section 80 and a comments section 90. The data section 80 is divided into pages 81-84, each section representing a single page of the document. Ordinarily, when the document is displayed or printed, the information for each page in the data section is retrieved and processed in order to display or print the document. The comments section 90 is of variable size and allows the addition of information unrelated to the actual display of the document. In the present invention, annotation and hyperlink information is stored in the comment section. Thus, the data section 80 is not affected and the document can be printed or displayed by any viewer or browser in the ordinary manner. Although a PostScript format is illustrated, the present invention can operate with different formats. The document format must include a data section separated into pages and a comment section or auxiliary file. The browser operates in the same manner in adding annotations and hyperlinks to the document regardless of the document format.

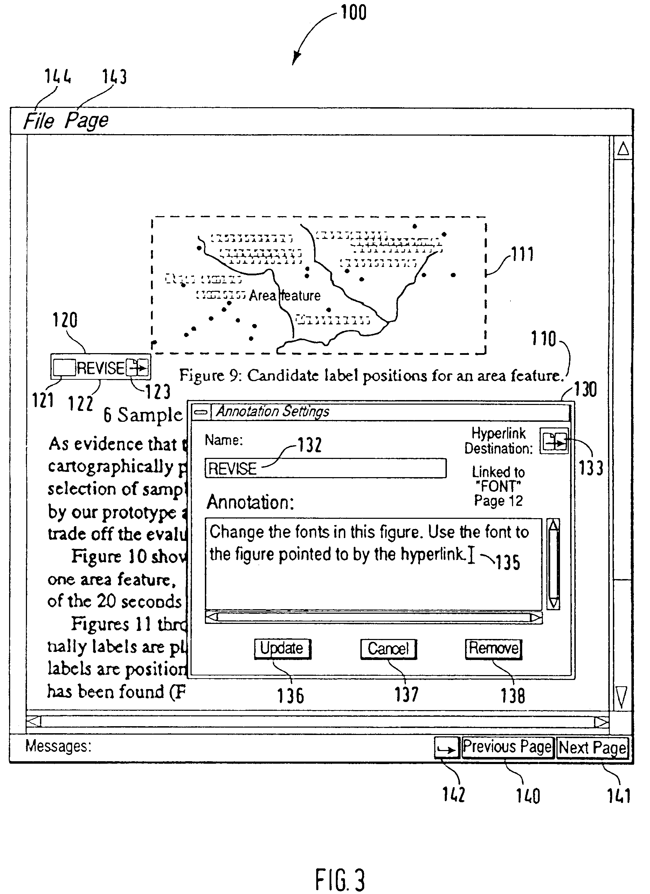

Fig. 3 represents a display 100 of a document according to the present invention. The document in PostScript format can include text 110 and figures or drawings 111. The text 110 and the drawings 111 are stored in the data section 80 of the document data. The browser of the present invention retrieves and displays this information for each page. Any known Postscript interpreter can be used for this function. The browser also allows the addition of annotation icons 120 at any location on the page. Of course, for other types of document formats, a corresponding, appropriate interpreter would be used. The annotation icon 120 includes a title 122, a representation of additional information or text 121, and a representation of any hyperlinks 123 to other annotations. Annotations are reviewed and changed through a dialog box 130. The dialog box 130 includes space for the name 132 of the annotation, a hyperlink 133 for the annotation, and the text 135 of the annotation. The dialog box 130 also includes buttons for performing certain functions with respect to this annotation. When the user revises a name, hyperlink destination, or text of the annotation, the user can then select the update button 136, or cancel button 137 in order to change or not change the annotation. The user may also select the remove button 138 in order to eliminate the annotation. The browser display also includes other areas for manipulating and viewing annotations in the document. At the bottom of the screen, there are buttons for moving to the previous page 140 and next page 141. A hypertext button 142 is used for adding annotations or hyperlinks. The user may select the page menu 143 in order to move around in the document or select additional pages. The file menu 144 is used to open and close documents and exit the system.

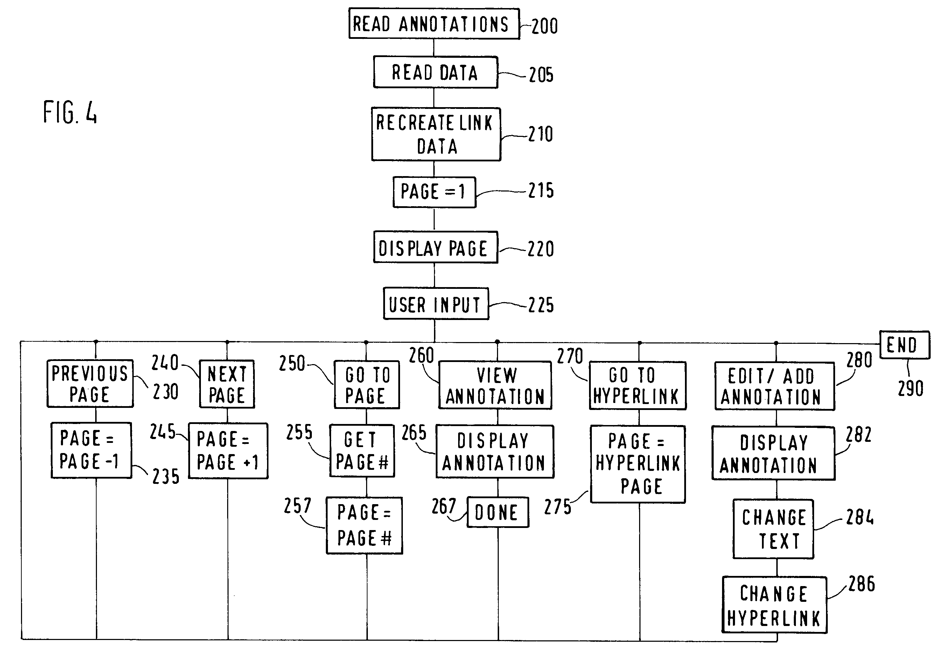

Fig. 4 illustrates the flow for a program instantiating the browser and allowing review of documents. At step 200, the data for the Postscript document is read from the document memory 20.

A step 200, the comments section of the document data is read from the document memory 20 in order to determine annotations. The annotations are stored following delimiters on the comments section of the postscript file. Table 1 illustrates storage of the annotation information in the comments section. Of course, the annotation information could be stored in any format which permits the information for each annotation to be retrieved.

**TABLE 1**

| |
|---|
| %BrowserAnnotation 0.0120050 0.072519 |
| %BrowserAnnotationName marker |
| %BrowserAnnotationText adsf |
| %BrowserAnnotationdEnd |
| %BrowserAnnotation 4 0.174938 0.176245 |
| %BrowserAnnotationName label |
| %BrowserAnnotationLink 0 |
| %BrowserAnnotationBacklink 0 |
| %BrowserAnnotationText This is an annotation |
| with multiple |
| %BrowserAnnotationText lines |
| %BrowserAnnotationEnd |

The program the creates a link structure based upon the annotation information (step 210). The first page is then selected (step 215), and displayed (step 220). The pages are displayed in the same manner as any browser displays a Postscript file. The system the waits for an input from the user (step 225). User may input information using the keyboard 40, mouse 41, or other input device. The steps to cause action are simple as illustrated in Fig. 4. At step 230, a user selects the previous page by selecting the previous page button 140 using the mouse. When the previous page is selected, the page number is adjusted (step 235) and the previous page is then displayed at step 220. Similarly, when the next page button 141 is selected (step 240) the page number is adjusted upwards by one (step 245) and the next page is displayed in step 220. A Go To page feature (step 250) can be selected using the page menu. The user then inputs the page number (step 255). That page number then becomes the current page (step 257), which is displayed at step 220. The user can view an annotation (step 260) by selecting an annotation icon. When the annotation icon is selected, the annotation dialog box is displayed (step 265). When the user is done viewing the annotation, the user will select the cancel button 137 (step 267). A user can go to the next linked annotation (step 270) by clicking on the annotation portion 123 of the annotation icon 120. As illustrated in Table 1, the hyperlink information includes the number of the linked annotation, which identifies the page and location on the page. The current page then becomes the target page of the hyperlink and is displayed in step 220.

Finally, the user may edit or add annotations (steps 280-286). To modify an annotation the user would select the annotation-insertion icon, which will cause dialog box 130 to be displayed. The user can then edit the name, hyperlink destination, or annotation text. When the user selects the update button 136 the information is stored with the linked data in order to maintain the new information. If the user selects the cancel button, then any changes are not made to the annotation. The user may also select the remove button 138 which results in the name, hyperlink data and text being deleted from the link data.

When the user exits the browser or document (step 290) the information in the linked data is then stored in the comments section of the document data stored in the document memory. By storing information in the comments section, the data portion of the document is not affected. The document can still be read, displayed and printed by other programs without the annotation information.

Having now described a few embodiments of the invention, it should be apparent to those skilled in the art that the foregoing is merely illustrative and not limiting, having been presented by way of example only. Numerous modifications and other embodiments are within the scope of one of ordinary skill in the art and are contemplated as falling within the scope of the invention as defined by the appended claims.

## Claims

1. A system for viewing a document having a comment data area comprising:
a browser for reading document data and displaying said document data;
annotation means for reading additional data in said comment data area associated with said document data; and
annotation display means for displaying the additional data with corresponding pages of said document data.

2. The system of claim 1, further comprising annotation creation means for creating additional data associated with said document data.

3. The system of claim 1, wherein said additional data includes a name, a location in said document data, and text.

4. The system of claim 1, wherein said annotation display means displays said additional data as an icon at a specified location relative to display of said document data; and wherein said system further comprises annotation enlargement means for displaying said additional data as text when said icon is selected by a user.

5. The system of claim 1, wherein said additional data includes a hyperlink to a second location in said document data; said system further comprising moving means for moving to said second location so as to display said document data at said second location.

6. The system of claim 1, further comprising:
annotation storage means for storing said additional data in said comment data area associated with said document data.

7. The system of claim 1, wherein said document is in a PostScript format and wherein said comment data area is a comment field of said document.

8. A method for viewing a document comprising the steps of:
reading document data of said document;
displaying portions of said document data;
creating additional data associated with a location in said document data based upon a user input; and
storing said additional data in a comment data area of said document.

9. The method of claim 8, further comprising the step of reading said additional data in the comment data area of said document.

10. The method of claim 9, further comprising the step of displaying said additional data at said location associated with said document data.

11. The method of claim 10, wherein said additional data is displayed as an icon;
the method further comprising the step of displaying said additional data as text when said icon is selected by a user.

12. The method of claim 8, wherein said additional data includes a second location associated with said document data;
the method further comprising the step displaying a portion of said document data associated with said second location when said associated data is selected by said user.
